# EUROPÄISCHE PATENTSCHRIFT

(11) **EP 1 727 694 B1**
(45) Veröffentlichungstag und Bekanntmachung des Hinweises auf die Patenterteilung: **12.12.2012**
(21) Anmeldenummer: 05715985.7
(22) Anmeldetag: 11.03.2005
(51) Int. Cl.: B60J 7/08

(54) **STEUERVERFAHREN UND STEUERVORRICHTUNG F R KRAFTFAHRZEUGE MIT EINEM AUFKLAPPBAREN DACH**
CONTROL METHOD AND CONTROL DEVICE FOR MOTOR VEHICLES COMPRISING A FOLDAWAY ROOF
PROCEDE DE COMMANDE ET DISPOSITIF DE COMMANDE POUR DES VEHICULES AUTOMOBILES EQUIPES D'UN TOIT REPLIABLE

(30) Priorität: 18.03.2004 DE 102004013229
(43) Veröffentlichungstag der Anmeldung: 06.12.2006
(73) Patentinhaber: Bayerische Motoren Werke Aktiengesellschaft, 80809 München (DE)
(72) Erfinder: KLUGE, Reinhold, 85399 Hallbergmoos (DE); EIDMANN, Carsten, 80997 München (DE)
(86) Internationale Anmeldenummer: PCT/EP2005/002627
(87) Internationale Veröffentlichungsnummer: WO 2005/092654

(56) Entgegenhaltungen:
- EP-A- 0 228 475
- EP-A- 0 835 778
- DE-A1- 10 108 493
- DE-C1- 4 320 468

## Beschreibung

Die Erfindung bezieht sich auf ein Steuerverfahren und eine Steuervorrichtung für Kraftfahrzeuge mit einem aufklappbaren Dach nach dem Oberbegriff des Patentanspruchs 1 bzw. 6.

Derartige Verfahren bzw. Vorrichtungen sind hinlänglich im Zusammenhang mit sogenannten Cabrio-Kraftfahrzeugen bekannt. Die Erfindung betrifft aufklappbare und gegebenenfalls auch versenkbare Dächer sowohl in Form von faltbaren Textil-Verdecken (vgl. z. B. DE 37 26 430 C1) als auch in Form von Klappdächern, die zumindest zum Teil auch aus starren Dachteilstücken bestehen (vgl. z. B. DE 196 42 154 A1).

Insbesondere die gattungsgemäβe DE 101 08 493 A1 betrifft eine Antriebsvorrichtung zur Durchführung eines Steuerverfahren für Cabrio-Dächer mit dem Ziel einer sanft auslaufender Bewegung.

Allgemein sind Verfahren für Kraftfahrzeuge bekannt, die beim Bewegen von Aggregaten (z. B. Fenster oder Schiebedächer) mittels einer steuerbaren Verstelleinrichtung eine Geschwindigkeitssteuerung im Hinblick auf Einklemmschutzfunktionen vornehmen.

Aufgabe der Erfindung ist, sogenannte Verdecksteuerungen bei Cabrios einerseits im Hinblick auf ein möglichst schnelles Öffnen und Schließen, andererseits jedoch im Hinblick auf möglichst harmonische Bewegungsabläufe zu verbessern.

Diese Aufgabe wird erfindungsgemäß durch ein Steuerverfahren nach Patentanspruch 1 und durch eine Steuervorrichtung nach Patentanspruch 6 gelöst. Vorteilhafte Weiterbildungen sind die Gegenstände der abhängigen Patentansprüche.

Durch die Erfindung wird ein von den Erfindern auch als "Soft-Start" bezeichneter weicher Anfahrmodus und ein von den Erfindern auch als "Soft-Landing" bezeichneter weicher Auslaufmodus bei einer/jeder Bewegungsphase eines Dachteils (faltbar oder klappbar) und/oder einer Klappe (z. B. Verdeckkastenklappe) beim Öffnen oder Schließen des Daches erreicht. Ein Dachteil oder eine Klappe können auch mehrere Bewegungsphasen durchführen. Auch können mehrere Dachteile gleichzeitig eine Bewegungsphase durchführen.

Der Erfindung liegt die Erkenntnis zugrunde, dass beim Öffnen oder Schließen von Verdecken oder Klapptops mittels elektrischer und/oder hydraulischer Mittel aufgrund der verhältnismäßig schweren Massen häufig unerwünschte ruckartige oder schwingende Bewegungen auftreten. Zur Lösung dieses Problems soll eine in der Geschwindigkeit veränderbare Verstelleinrichtung vorgesehen werden, die insbesondere zu Beginn und am Ende einer Bewegungsphase ein weiches Anfahren bzw. Abbremsen der Massen ermöglicht. Am Anfang und am Ende einer Bewegungsphase sollen Dachteile oder Klappen also langsamer bewegt werden als innerhalb des übrigen Verstellweges. Es wurde festgestellt, dass bei einem langsamen Anfahren und Abbremsen am Anfang und am Ende einer Bewegungsphase durch die Verhinderung von Störschwingungen dafür innerhalb des übrigen Verstellweges eine gegenüber dem Stand der Technik schnellere Geschwindigkeit einstellbar ist. Insgesamt kann damit eine kürzere Öffnungs - und Schließzeit eines aufklappbaren und gegebenenfalls versenkbaren Daches erreicht werden als beim Stand der Technik.

Zur näheren Erläuterung der Erfindung wird in der Zeichnung ein Ausführungsbeispiel der Erfindung dargestellt. Es zeigen
Fig. 1 schematisch ein aufklappbares und versenkbares Dach mit einem Dachteil und einer Klappe in Form einer Verdeckkastenklappe, wobei das Dachteil und die Klappe in einer Ruheposition dargestellt sind,
Fig. 2 schematisch ein aufklappbares und versenkbares Dach mit einem Dachteil und einer Klappe in Form einer Verdeckkastenklappe, wobei das Dachteil eine erste Bewegungsphase durchlaufen hat,
Fig. 3 schematisch ein aufklappbares und versenkbares Dach mit einem Dachteil und einer Klappe in Form einer Verdeckkastenklappe, wobei die Klappe eine erste Bewegungsphase durchlaufen hat,
Fig. 4 schematisch einen ersten möglichen vorgegebenen Geschwindigkeitsverlauf des Dachteils in der ersten Bewegungsphase gemäß der Erfindung,
Fig. 5 schematisch einen zweiten möglichen vorgegebenen Geschwindigkeitsverlauf des Dachteils in der ersten Bewegungsphase gemäß der Erfindung und
Fig. 6 eine möglichst einfache Anordnung zur Ansteuerung der Verstelleinrichtung zum Erreichen des vorgegebenen Geschwindigkeitsverlaufs des Dachteils.

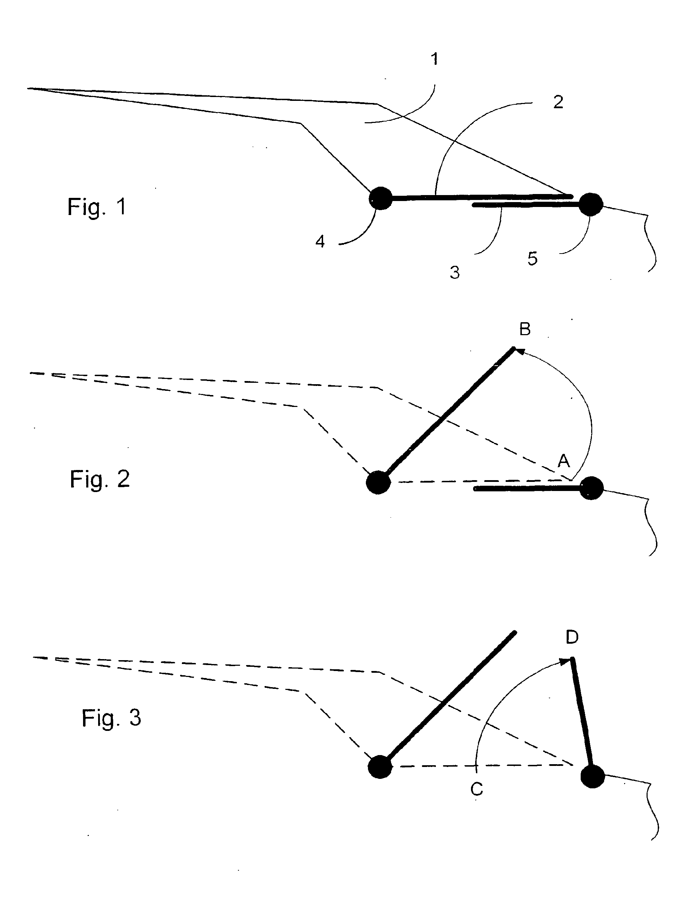

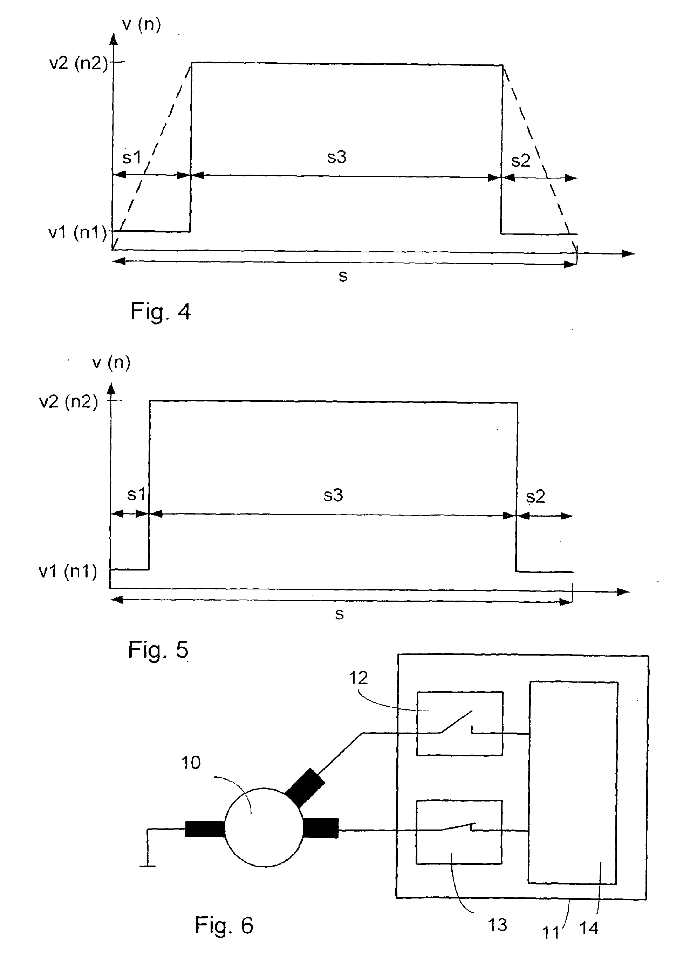

In Fig. 1 ist schematisch ein aufklappbares und versenkbares Dach 1 mit einem Dachteil 2 und einer Klappe 3 in Form einer Verdeckkastenklappe dargestellt. Das Dach 1 weist gegebenenfalls hier nicht dargestellte weitere steuerbare Dachteile auf. Das Dachteil 2 und die Klappe 3 führen beim Öffnen und Schließen des Daches 1 mehrere Bewegungsphasen (hier jeweils nur eine dargestellt) durch. Fig. 2 zeigt eine erste Bewegungsphase des Dachteils 2, die durch einen von den zwei Endlagen A und B begrenzten Verstellweg s (Fig. 3 und Fig. 4) des Dachteils 2 definiert ist. Fig. 3 zeigt eine erste Bewegungsphase der Klappe 3, die sich an die Bewegungsphase des Dachteils 2 von A nach B anschließt und die durch einen von den zwei Endlagen C und D begrenzten Verstellweg s der Klappe 3 definiert ist. Weiterhin sind in den Figuren 1 bis 3 die Verstelleinrichtung 4 für das Dachteil 2 und die Verstelleinrichtung 5 für die Klappe 3 schematisch angedeutet. Eine Verstelleinrichtung kann aus einem oder mehreren Aktuatoren unter Zusammenwirken mechanischer und/oder hydraulischer Komponenten bestehen. Eine besonders einfache und kostengünstige Verstelleinrichtung wird weiter unten im Zusammenhang mit Fig. 6 beschrieben.

Der Verstellweg s des Dachteils 2 kann beispielsweise als Bahn definiert sein, die sich durch den Bewegungsablauf während der Bewegungsphase bezogen auf einen bestimmten Punkt des Dachteils ergibt. Der vorgegebene Geschwindigkeitsverlauf v bezieht sich dann auf die Geschwindigkeit, mit der sich dieser Punkt bewegt. Die Erfindung umfasst jede Ansteuerung einer Verstelleinrichtung, die zu diesem Geschwindigkeitsverlauf v führt. Die Ansteuerung hierzu kann empirisch ermittelt werden und als Kennlinie, Tabelle oder Kennfeld im Steuergerät abgespeichert werden. Der Einfachheit halber wird das erfindungsgemäße Verfahren in vorteilhafter Weise als Steuerung und nicht als Regelung durchgeführt.

Das elektronische Steuergerät, das üblicherweise ohnehin für Verdecksteuerungen verwendet wird, weist Mittel auf, beispielsweise einen entsprechenden gespeicherten neuen Programmteil und entsprechende Endstufen zur Ansteuerung der Verstelleinrichtung 4 und/oder 5, durch die die Verstelleinrichtung 4 und/oder 5 derart angesteuert wird, dass die Geschwindigkeit, mit der das Dachteil 2 oder die Klappe 3 bewegt wird, am Anfang und am Ende des Verstellweges s, also für einen den Verstellweg beginnenden ersten Wegabschnitt s1 und für einen den Verstellweg s beendenden zweiten Wegabschnitt s2, kleiner ist als die Geschwindigkeit v für den Wegabschnitt s3 zwischen dem ersten und dem zweiten Wegabschnitt, also zwischen dem Anfang und dem Ende des Verstellweges s. (vgl. auch Figuren 4 und 5).

In den Figuren 4 und 5 werden schematisch für einen Verstellweg s erfindungsgemäße Geschwindigkeitsverläufe v vorgegeben. In Fig. 4 wird für den den Verstellweg s beginnenden ersten Wegabschnitt s1 und für den den Verstellweg s beendenden zweiten Wegabschnitt s2 eine erste Geschwindigkeit v1 vorgegeben, die kleiner ist als die zweite Geschwindigkeit v2 für den Wegabschnitt s3 zwischen dem ersten und dem zweiten Wegabschnitt. In Fig. 4 wird die vergleichsweise niedrige Geschwindigkeit v2 für den ersten Wegabschnitt s1 und den zweiten Wegabschnitt s2 gleich lange vorgegeben. In Fig. 5 wird gezeigt, dass die vergleichsweise niedrige Geschwindigkeit v2 für den ersten Wegabschnitt s1 und den zweiten Wegabschnitt s2 auch unterschiedlich lange vorgegeben werden kann.

Alternativ kann gemäß den gestrichelten Linien in Fig. 4 ein kontinuierliches Ansteigen und Abfallen für den ersten Wegabschnitt s1 und den zweiten Wegabschnitt s2 vorgenommen werden. Hierzu könnte beispielsweise ein Aktuator einer Verstelleinrichtung vom Steuergerät mit einem entsprechenden pulsweitenmodulierten Signal angesteuert werden. Durch den häufigen Flankenwechsel bei einer derartigen Ansteuerung könnten allerdings Probleme im Hinblick auf die elektromagnetische Verträglichkeit des Systems entstehen.

Eine besonders einfache und kostengünstige Ausgestaltung der Erfindung ist im Zusammenhang mit Fig. 6 erläutert. Die Verstelleinrichtung 4 oder 5 weist vorteilhafterweise einen Elektromotor 10 auf, dessen Drehzahl vom Steuergerät 11 im Hinblick auf das Erreichen der vorgegebenen Geschwindigkeit v einstellbar ist.

Zum technischen Hintergrund: Üblicherweise werden Verdecke und Klapptops mittels Hydraulikkomponenten bewegt, die von einer Hydraulikpumpe mit einem Elektromotor angetrieben werden. Die Hydraulikkomponenten umfassen beispielsweise einen Ventilblock zum Schalten der einzelnen den jeweiligen Dachteilen oder Klappen zugeordneten Hydraulikkreisen. Bisher wird die Hydraulikpumpe wie die einzelnen Ventile über den Elektromotor mit einer einzigen relativ hohen Drehzahl bzw. Leistung "digital" also hart ein- oder ausgeschaltet. Dies kann zu den oben erwähnten unerwünschten Störschwingungen führen, da die Hydraulikzylinder sofort den vollen nicht komprimierbaren Ölstrom erhalten.

Erfindungsgemäß wird vorzugsweise ein derartiger Elektromotor entsprechend dem in Fig. 6 dargestellten Elektromotor 10 derart ausgestaltet, dass er mit zwei unterschiedlichen Leistungen bzw. Drehzahlen n1 und n2 betrieben werden kann. Die Drehzahlen n1 und n2 sind derart ausgelegt, dass der Elektromotor 10 vom Steuergerät 11 mittels eines entsprechenden Programmteils 14 und über entsprechendes Schließen der Schalter (bzw. Endstufen) 12 und 13 mit der ersten Drehzahl n1 zum Erreichen der vorgegebenen vergleichsweise niedrigen ersten Geschwindigkeit v1 für den ersten und zweiten Wegabschnitt s1 und s2 und mit der zweiten Drehzahl n2 zum Erreichen der vorgegebenen vergleichsweise hohen zweiten Geschwindigkeit v2 für den übrigen Verstellweg s3 betreibbar ist.

Vorteilhafterweise ist das Steuergerät 11 über den Programmteil 14 derart ausgestaltet, dass die Umschaltung von der ersten Drehzahl n1 auf die zweite Drehzahl n2 und/oder die Umschaltung von der zweiten Drehzahl n2 auf die erste Drehzahl n1 abhängig von der Außentemperatur und/oder vom Kraftfahrzeugbatteriezustand vornehmbar ist. Hierbei wird generell die für den ersten und/oder zweiten Wegabschnitt s1 und/oder s2 vorgegebene niedrigere Geschwindigkeit v1 umso kürzer vorgegeben, je niedriger die Außentemperatur und/oder je schlechter der Kraftfahrzeugbatteriezustand bzw. je niedriger die Spannung der Kraftfahrzeugbatterie ist.

Alternativ kann die Verstelleinrichtung anstelle eines in der Drehzahl veränderbaren Elektromotors eine Hydraulikpumpe und den Volumenstrom der Hydraulikflüssigkeit zur Verdecksteuerung steuernde bzw. regelnde Stellglieder (z. B. Ventile) aufweisen. Eine derartige Hydraulikpumpe ist üblicherweise nur mit einer einzigen festen Drehzahl betreibbar. Diese Hydraulikpumpe kann mit einer entsprechenden Ansteuerung der Stellglieder durch das Steuergerät 11 ebenfalls derart zusammenwirken, dass eine vorgegebene Geschwindigkeit v erreicht wird. Diese Alternative dürfte jedoch im Vergleich mit der vorgenannten Elektromotor-Version aufwendiger zu realisieren sein.

## Patentansprüche

1. Steuerverfahren für Kraftfahrzeuge mit einem aufklappbaren Dach, bei dem zumindest ein Dachteil oder eine Klappe in mindestens einer Bewegungsphase bewegt wird, die durch einen von zwei Endlagen begrenzten Verstellweg des Dachteils oder der Klappe definiert ist, und bei dem mittels eines elektronischen Steuergeräts eine Verstelleinrichtung zur Bewegung des Dachteiles oder der Klappe angesteuert wird, **dadurch gekennzeichnet, dass** mittels des elektronischen Steuergeräts (11) die Verstelleinrichtung (4; 5) derart angesteuert wird, dass die Geschwindigkeit (v), mit der das Dachteil (2) oder die Klappe (3) bewegt wird, für einen den Verstellweg (s) beginnenden ersten Wegabschnitt (s1) und für einen den Verstellweg (s) beendenden zweiten Wegabschnitt (s2) kleiner ist als die Geschwindigkeit (v) für den Wegabschnitt (s3) zwischen dem ersten und dem zweiten Wegabschnitt, wobei die Geschwindigkeit für den ersten Wegabschnitt (s1) und die Geschwindigkeit für den zweiten Wegabschnitt (s2) unterschiedlich lange vorgegeben werden.

2. Steuerverfahren nach Patentanspruch 1, **dadurch gekennzeichnet, dass** die Verstelleinrichtung (4; 5) einen Elektromotor (10) aufweist, dessen Drehzahl (n) vom Steuergerät (11) im Hinblick auf das Erreichen der vorgegebenen Geschwindigkeit (v) eingestellt wird.

3. Steuerverfahren nach Patentanspruch 2, **dadurch gekennzeichnet, dass** der Elektromotor (10) vom Steuergerät (11) mit einer ersten Drehzahl (n1) zum Erreichen einer vorgegebenen vergleichsweise niedrigen ersten Geschwindigkeit (v1) für den ersten und zweiten Wegabschnitt (s1, s2) und mit einer zweiten Drehzahl (n2) zum Erreichen einer vorgegebenen vergleichsweise hohen zweiten Geschwindigkeit (v2) für den übrigen Verstellweg (s3) betrieben wird.

4. Steuerverfahren nach Patentanspruch 3, **dadurch gekennzeichnet, dass** die Umschaltung von der ersten Drehzahl (n1) auf die zweite Drehzahl (n2) und/oder die Umschaltung von der zweiten Drehzahl (n2) auf die erste Drehzahl (n1) vom Steuergerät abhängig von der Außentemperatur und/oder vom Kraftfahrzeugbatteriezustand vorgenommen wird.

5. Steuerverfahren nach Patentanspruch 1, **dadurch gekennzeichnet, dass** die Verstelleinrichtung (4; 5) eine Hydraulikpumpe und den Volumenstrom steuernde bzw. regelnde Stellglieder aufweist, und dass damit der Volumenstrom vom Steuergerät (11) im Hinblick auf das Erreichen der vorgegebenen Geschwindigkeit (v) eingestellt wird.

6. Steuervorrichtung für Kraftfahrzeuge mit einem aufklappbaren Dach, bei der zumindest ein Dachteil oder eine Klappe in mindestens einer Bewegungsphase bewegt wird, die durch einen von zwei Endlagen begrenzten Verstellweg des Dachteils oder der Klappe definiert ist, mit einem elektronischen Steuergerät, das eine Verstelleinrichtung zur Bewegung des Dachteiles oder der Klappe ansteuert, **dadurch gekennzeichnet, dass** das elektronische Steuergerät (11) Mittel (12, 13, 14) aufweist, durch die die Verstelleinrichtung (4; 5) derart angesteuert wird, dass die Geschwindigkeit (v), mit der das Dachteil (2) oder die Klappe (3) bewegt wird, für einen den Verstellweg (s) beginnenden ersten Wegabschnitt (s1) und für einen den Verstellweg (s) beendenden zweiten Wegabschnitt (s2) kleiner ist als die Geschwindigkeit (v) für den Wegabschnitt (s3) zwischen dem ersten und dem zweiten Wegabschnitt, wobei die Geschwindigkeit für den ersten Wegabschnitt (s1) und die Geschwindigkeit für den zweiten Wegabschnitt (s2) unterschiedlich Lange vorgegeben werden.

7. Steuervorrichtung nach Patentanspruch 6, **dadurch gekennzeichnet, dass** die Verstelleinrichtung (4; 5) einen Elektromotor (10) aufweist, dessen Drehzahl vom Steuergerät (11) im Hinblick auf das Erreichen der vorgegebenen Geschwindigkeit (v) einstellbar ist.

8. Steuervorrichtung nach Patentanspruch 7, **dadurch gekennzeichnet, dass** der Elektromotor vom Steuergerät mit einer ersten Drehzahl (n1) zum Erreichen einer vorgegebenen vergleichsweise niedrigen ersten Geschwindigkeit (v1) für den ersten und zweiten Wegabschnitt (s1, s2) und mit einer zweiten Drehzahl (n2) zum Erreichen einer vorgegebenen vergleichsweise hohen zweiten Geschwindigkeit (v2) für den übrigen Verstellweg (s3) betreibbar ist.

9. Steuervorrichtung nach Patentanspruch 8, **dadurch gekennzeichnet, dass** das Steuergerät (11) derart ausgestaltet ist, dass die Umschaltung von der ersten Drehzahl (n1) auf die zweite Drehzahl (n2) und/oder die Umschaltung von der zweiten Drehzahl (n2) auf die erste Drehzahl (n1) abhängig von der Außentemperatur und/oder vom Kraftfahrzeugbatteriezustand vornehmbar ist.

10. Steuervorrichtung nach Patentanspruch 7, **dadurch gekennzeichnet, dass** die Verstelleinrichtung (4; 5) eine Hydraulikpumpe und den Volumenstrom steuernde bzw. regelnde Stellglieder aufweist, und dass das Steuergerät (11) derart ausgestaltet ist, dass der Volumenstrom vom Steuergerät (11) mittels entsprechender Ansteuerung der Hydraulikpumpe und der Stellglieder im Hinblick auf das Erreichen der vorgegebenen Geschwindigkeit (v) einstellbar ist.

## Claims

1. A control method for motor vehicles with a foldaway roof, in which at least one roof part or one flap is moved in at least one movement phase, which is defined by an adjustment path of the roof part or flap limited by two end positions, and in which an adjustment mechanism for moving the roof part or the flap is activated by means of an electronic control apparatus, **characterised in that** the adjustment mechanism (4; 5) is activated by means of the electronic control apparatus (11) in such a way that the speed (v), with which the roof part (2) or flap (3) is moved, is lower for a first path section (s1) starting the adjusting path (s) and for a second path section (s2) ending the adjustment path (s) than the speed (v) for the path section (s3) between the first and the second path section, the speed for the first path section (s1) and the speed for the second path section (s2) being predetermined for different durations.

2. A control method according to claim 1, **characterised in that** the adjustment mechanism (4; 5) has an electric motor (10), the rotational speed (n) of which is set by the control apparatus (11) with regard to reaching the predetermined speed (v).

3. A control method according to claim 2, **characterised in that** the electric motor (10) is operated by the control apparatus (11) at a first rotational speed (n1) to reach a predetermined comparatively low first speed (v1) for the first and second path section (s1, s2) and at a second rotational speed (n2) to reach a predetermined comparatively high second speed (v2) for the remaining adjustment path (s3).

4. A control method according to claim 3, **characterised in that** the change-over from the first rotational speed (n1) to the second rotational speed (n2) and/or the change-over from the second rotational speed (n2) to the first rotational speed (n1) is carried out by the control apparatus depending on the external temperature and/or the motor vehicle battery state.

5. A control method according to claim 1, **characterised in that** the adjustment mechanism (4; 5) has a hydraulic pump and actuating elements controlling or regulating the volume flow, and **in that** the volume flow is thus set by the control apparatus (11) with regard to reaching the predetermined speed (v).

6. A control device for motor vehicles with a foldaway roof, in which at least one roof part or a flap is moved in at least one movement phase, which is defined by an adjustment path of the roof part or the flap limited by two end positions, with an electronic control apparatus, which activates an adjustment mechanism to move the roof part or flap, **characterised in that** the electronic control apparatus (11) has means (12, 13, 14), by means of which the adjustment mechanism (4; 5) is activated in such a way that the speed (v), with which the roof part (2) or flap (3) is moved, is lower for a first path section (s1) starting the adjustment path (s) and for a second path section (s2) ending the adjustment path (s) than the speed (v) for the path section (s3) between the first and the second path section, the speed for the first path section (s1) and the speed for the second path section (s2) being predetermined for different durations.

7. A control device according to claim 6, **characterised in that** the adjustment mechanism (4; 5) has an electric motor (10), the rotational speed of which can be set by the control apparatus (11) with regard to reaching the predetermined speed (v).

8. A control device according to claim 7, **characterised in that** the electric motor can be operated by the control apparatus at a first rotational speed (n1) to reach a predetermined comparatively low first speed (v1) for the first and second path section (s1, s2) and at a second rotational speed (n2) to reach a predetermined comparatively high second speed (v2) for the remaining adjustment path (s3).

9. A control device according to claim 8, **characterised in that** the control apparatus (11) is configured in such a way that the change-over from the first rotational speed (n1) to the second rotational speed (n2) and/or the change-over from the second rotational speed (n2) to the first rotational speed (n1) can be carried out depending on the external temperature and/or the motor vehicle battery state.

10. A control device according to claim 7, **characterised in that** the adjustment mechanism (4; 5) has a hydraulic pump and actuating elements controlling or regulating the volume flow, and **in that** the control apparatus (11) is configured in such a way that the volume flow can be set by the control apparatus (11) by means of corresponding activation of the hydraulic pump and the actuating elements with regard to reaching the predetermined speed (v).

## Revendications

1. Procédé de commande d'un véhicule automobile équipé d'un toit ouvrant selon lequel
- au moins une partie du toit ou un volet sont déplacés dans au moins une phase de mouvement définie par la course de la partie de toit ou du volet, cette course étant limitée par deux positions de fin de course, et
- un appareil de commande électronique commande l'installation de réglage pour déplacer la partie de toit et/ou le volet,
procédé de commande **caractérisé en ce que**
- l'appareil de commande électronique (11) commande l'installation de réglage (4, 5) pour que la vitesse (v) avec laquelle la partie de toit (2) ou le volet (3) sont déplacés sur le premier segment de trajet (s1) commençant la course de réglage (s) et sur un second segment de trajet (s2) terminant la course de réglage (s), soit inférieure à la vitesse (v) sur le segment de trajet (s3) compris entre le premier et le second segment de trajet,
- la vitesse sur le premier segment de trajet (s1) et la vitesse sur le second segment de trajet (s2) étant prédéfinies avec une durée différente.

2. Procédé de commande selon la revendication 1,
**caractérisé en ce que**
l'installation de réglage (4, 5) comporte un moteur électrique (10) dont la vitesse de rotation (n) est réglée par l'appareil de commande (11) pour atteindre la vitesse prédéfinie (v).

3. Procédé de commande selon la revendication 2,
**caractérisé en ce que**
le moteur électrique (10) est géré par l'appareil de commande (11) avec une première vitesse de rotation (n1) pour atteindre une première vitesse (v1) prédéfinie, relativement basse, pour le premier et le second segment de trajet (s1, s2) et une seconde vitesse de rotation (n2) pour atteindre une seconde vitesse (v2) relativement élevée, prédéfinie, pour la partie restante de la course de réglage (s3).

4. Procédé de commande selon la revendication 3,
**caractérisé en ce que**
la commutation passant de la première vitesse de rotation (n1) à la seconde vitesse de rotation (n2) et/ou la commutation de la seconde vitesse de rotation (n2) à la première vitesse de rotation (n1) est effectuée par l'appareil de commande en fonction de la température extérieure et/ou du niveau de la batterie du véhicule.

5. Procédé de commande selon la revendication 1,
**caractérisé en ce que**
l'installation de réglage (4, 5) comporte une pompe hydraulique et un organe de réglage pour commander ou régler le débit volumique, et
le débit volumique est réglé par l'appareil de commande (11) pour atteindre la vitesse prédéfinie (v).

6. Dispositif de commande d'un véhicule équipé d'un toit ouvrant selon lequel au moins une partie du toit ou un volet est déplacé dans au moins une phase de mouvement définie par une course de réglage délimitée par deux positions de fin de course de la partie de toit et du volet, avec un appareil de commande électronique qui commande l'installation de réglage pour déplacer la partie de toit ou le volet,
dispositif de commande **caractérisé en ce que**
l'appareil de commande électronique (11) comporte des moyens (12, 13, 14) commandés par l'installation de réglage (4, 5) de façon que la vitesse (v) avec laquelle la partie de toit (2) ou le volet (3) sont déplacés pour un premier segment de trajet (s1) commençant la course de réglage (s) et pour un second segment de trajet (s2) terminant la course de réglage et qui est inférieure à la vitesse (v) pour le segment de trajet (s3) compris entre le premier et le second segment de trajet, la vitesse pour le premier segment de trajet (s1) et celle du second segment de trajet (s2) étant de durée différente, prédéfinie.

7. Dispositif de commande selon la revendication 6,
**caractérisé en ce que**
l'installation de réglage (4, 5) comporte un moteur électrique (10) dont la vitesse de rotation est réglée par l'appareil de commande (11) pour atteindre la vitesse prédéfinie (v).

8. Dispositif de commande selon la revendication 7,
**caractérisé en ce que**
le moteur électrique est réglé par l'appareil de commande à une première vitesse de rotation (n1) pour atteindre une première vitesse (v1) prédéfinie, relativement basse pour le premier et le second segment de trajet (s1, s2) et à une seconde vitesse de rotation (n2) pour atteindre une seconde vitesse (v2) relativement élevée pour la partie restante de la course de réglage (s3).

9. Dispositif de commande selon la revendication 8,
**caractérisé en ce que**
l'appareil de commande (11) commute de la première vitesse de rotation (n1) à la seconde vitesse de rotation (n2) et/ou de la seconde vitesse de rotation (n2) à la première vitesse de rotation (n1) en fonction de la température extérieure et/ou de l'état de la batterie du véhicule.

10. Dispositif de commande selon la revendication 7,
**caractérisé en ce que**
l'installation de réglage (4, 5) comporte un organe de réglage commandant ou réglant une pompe hydraulique ou un débit volumique, et l'appareil de commande (11) est conçu pour que le débit volumique soit réglé par l'appareil de commande (11) par une commande appropriée de la pompe hydraulique et/ou des organes d'actionnement pour atteindre la vitesse prédéfinie (v).
